# FASCICULE DE BREVET EUROPEEN

(11) **EP 4 258 137 B1**
(45) Date de publication et mention de la délivrance du brevet: **04.09.2024**
(21) Numéro de dépôt: 23166474.9
(22) Date de dépôt: 04.04.2023
(51) Int. Cl.: G06F 21/00, H04L 12/46, G06F 21/60

(54) **PROCÉDÉ DE DISTRIBUTION DE FICHIER ENTRE SYSTÈMES 3GPP MCDATA INTERCONNECTÉS**
VERFAHREN ZUR DATEIVERTEILUNG ZWISCHEN MITEINANDER VERBUNDENEN 3GPP-MCDATA-SYSTEMEN
METHOD FOR DISTRIBUTING FILE BETWEEN 3GPP MCDATA INTERCONNECTED SYSTEMS

(30) Priorité: 07.04.2022 FR 2203169
(43) Date de publication de la demande: 11.10.2023
(73) Titulaire: Airbus DS SLC, 78990 Elancourt (FR)
(72) Inventeur: Paterour, Olivier, Elancourt (FR); Piroard, François, Elancourt (FR)
(74) Mandataire: Cabinet Camus Lebkiri

(56) Documents cités:
- WO-A1-2022/013190
- "3rd Generation Partnership Project; Technical Specification Group Services and System Aspects; Functional architecture and information flows to support Mission Critical Data (MCData); Stage 2 (Release 17)", vol. SA WG6, no. V17.5.0, 19 December 2020 (2020-12-19), pages 1 - 223, XP051975162, Retrieved from the Internet <URL:https://ftp.3gpp.org/Specs/archive/23_series/23.282/23282-h50.zip 23282-h50.doc> [retrieved on 20201219]

## Description

### DOMAINE TECHNIQUE DE L'INVENTION

Le domaine technique de l'invention est celui des télécommunications.

La présente invention concerne un procédé de distribution de fichiers entre systèmes 3GPP MCData interconnectés, et en particulier permettant de gérer l'accès à un fichier stocké au sein d'un système par un système extérieur en limitant les risques de sécurité, ainsi qu'un procédé de suppression d'un tel fichier.

### ARRIERE-PLAN TECHNOLOGIQUE DE L'INVENTION

Les normes de radiocommunication PMR (selon la dénomination anglo-saxonne « Professional Mobile Radio » pour « Radio Mobile Professionnelle ») TETRAPOL^{®}, TETRA^{®} ou encore P25^{®} permettent la mise en oeuvre de réseaux professionnels sécurisés. Ces réseaux à bande étroite sont des réseaux nationaux ou locaux : ils sont implémentés par exemple au sein d'une organisation telle qu'une entreprise, au sein d'un pays par exemple pour les communications des pompiers, des forces de l'ordre, des militaires etc.

Ces réseaux évoluent vers une prise en charge d'échanges en large bande. Le standard 3GPP régissant les réseaux mobiles de type « GSM » selon la dénomination anglo-saxonne « Global System for Mobile Communications » et plus particulièrement dans les déploiements faisant appel à des services de communications critiques définis par le 3GPP appelés « MCS » selon la dénomination anglo-saxonne « Mission Critical Services » permet ces échanges sécurisés en large bande.

On entend par « réseau de communication selon le standard 3GPP MCS », un réseau de communication compatible avec le standard 3GPP MCS et plus particulièrement avec la version actuelle du 3GPP qui est la version 17, avec les versions précédentes à partir de la version 13 et avec les versions suivantes intégrant toutes les caractéristiques de l'invention.

Dans le standard 3GPP MCS, les services de communication suivants sont définis :
- MCPTT, de l'anglais « Mission Critical Push To Talk » pour « Appuyer Pour Parler en Mission Critique » en français, qui permet de réaliser des communications voix,
- MCVideo, qui permet de réaliser des communications vidéo,
- MCData, qui comprend trois sous-services :
   - SDS de l'anglais « Short Data Service » pour « Service de données courtes » en français et
   - FD de l'anglais « File Distribution » pour « Distribution de fichier » en français,
   - IPCon de l'anglais « IP Connectivity » pour « Connectivité IP » en français.

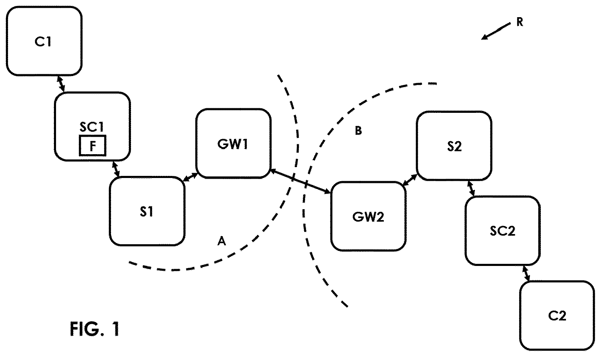

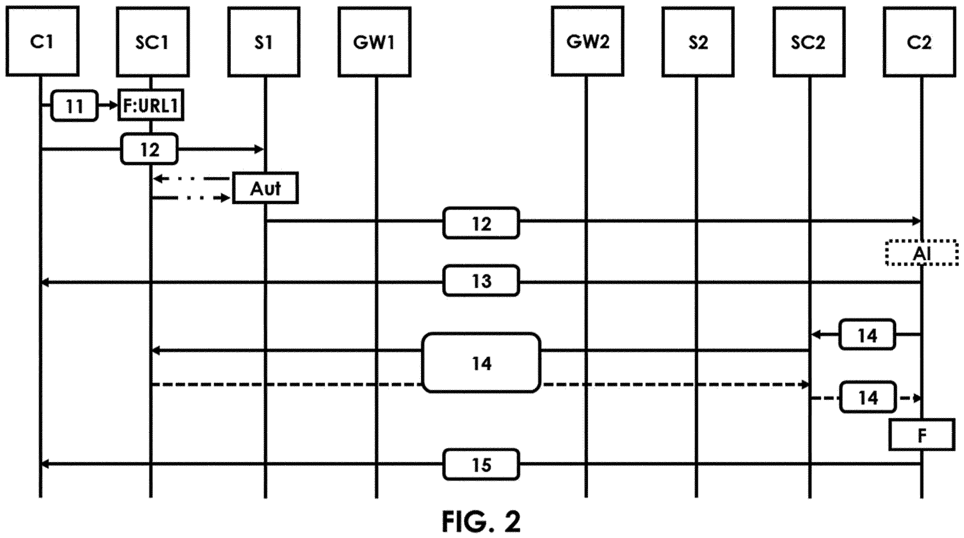

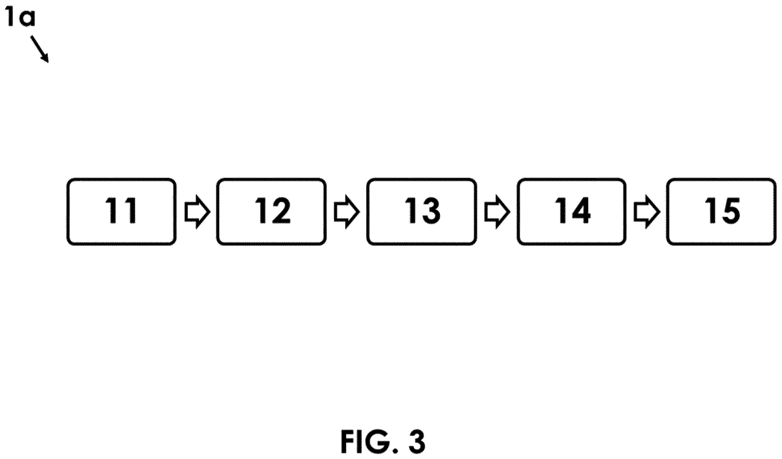

Un réseau R permettant de mettre en oeuvre une distribution de fichier FD du service MCData est par exemple représenté à la Figure 1. Ce réseau R est réparti sur plusieurs systèmes interconnectés A et B. Le système A comprend un client MCData C1 connecté à un serveur de contenu MCData SC1 (aussi appelé « MCData Content Server » selon la dénomination du 3GPP MCS en anglais). Le serveur de contenu SC1 peut communiquer avec d'autres serveurs du réseau R. A la Figure 1, le serveur de contenu SC1 peut communiquer avec un serveur 3GPP MCS S1. Un tel serveur S1 comprend une fonction de distribution de fichier FD, en collaboration avec le serveur de contenu de fichier SC1. Cela est représenté à la Figure 2, qui montre les échanges compris dans un procédé 1a connu de distribution de fichier dans le réseau R de la Figure 1. Le procédé 1a est aussi représenté à la Figure 3. Ce procédé est décrit dans la spécification technique 3GPP TS 23.282 (MCData Stage 2) Révision 17 Section 7.5.2.4.3. Ce procédé nécessite l'implémentation d'un accord de service en les deux systèmes interconnectés A et B, notamment pour partager des informations MCData comme des messages ou des fichiers. Ce procédé utilise le protocole HTTP (« Hypertext Transfer Protocol » selon la dénomination anglo-saxonne pour « Protocole de Transfert Hypertexte » en français).

Dans une étape 11, le client C1 charge son fichier F sur le serveur de contenu SC1, comme décrit dans la spécification technique 3GPP TS 23.282 (MCData Stage 2) Révision 17 Section 7.5.2.2. Le fichier F se voit alors attribuer, par le serveur de contenu SC1, une adresse URL (« Uniform Resource Locator » selon la dénomination anglo-saxonne pour « Localisateur Uniforme de Ressources ») URL1. L'adresse URL1 localise le fichier F et permet à un client ou un serveur du réseau R ou d'un réseau extérieur d'identifier le fichier F et donc d'accéder au fichier F stocké par le serveur de contenu SC1.

Dans une étape 12, le client C1 envoie une requête de distribution de fichier MCData, appelée « MCData FD Request » selon la dénomination anglo-saxonne. Une telle requête comprend l'adresse URL1 du fichier F et est destinée :
- à un client C2 du réseau R, pour un partage de fichier entre deux clients MCData,
- à une pluralité de clients appartenant à un groupe MCData du réseau R pour un partage de fichier dans le groupe MCData.

Cette requête permet d'informer les clients destinataires qu'un fichier F est disponible à l'adresse URL1 sur le serveur de contenu SC1 du réseau R. Dans le cas représenté à la Figure 2, le client C2, appartenant au système B interconnecté avec le système A, est destinataire de la requête envoyée à l'étape 12. L'étape 12 comprend plusieurs sous-étapes de transmission de cette requête, d'abord envoyée par le client C1 au serveur S1. Le serveur S1 recevant cette requête réalise une sous-étape Aut de vérification que la client C1 a bien l'autorisation d'envoyer la requête, et de vérification auprès du serveur de contenu SC1 que le fichier F est toujours disponible à l'adresse URL1 comprise dans la requête, cette sous-étape étant représentée par des flèches en pointillés de tailles différentes. Si le fichier n'est plus disponible, la requête 12 n'est pas transmise et le procédé est arrêté. Si le fichier F est toujours disponible, après vérification de l'autorisation et de la disponibilité du fichier F, la requête est envoyée du serveur S1 à un serveur S2 compris dans le système B interconnecté avec le système A, car le système B comprend le client C2 destinataire. Le serveur S2 est un serveur 3GPP MCS mettant en oeuvre une fonction de distribution de fichier FD. La requête est transmise, à l'étape 12, via la passerelle GW1 appartenant au système A et via la passerelle GW2 appartenant au système B.

Le serveur S2 reçoit la requête et vérifie quels utilisateurs ont la possibilité de recevoir un fichier et quels utilisateurs sont autorisés à recevoir le fichier F. Le fichier F est ensuite transmis au client C2, utilisé par un utilisateur autorisé à recevoir le fichier F. Le client C2 recevant la requête peut informer son utilisateur de la disponibilité du fichier F, par exemple via une alerte AI, par exemple via un écran du client C2.

Le client C2 envoie alors une réponse à une étape 13, transmise par le serveur S2 au serveur S1 via les passerelles GW1 et GW2, puis par le serveur S1 au client C1. Cette réponse est un acquittement protocolaire, sans intervention de l'utilisateur, informant de la bonne réception du message par le client C2.

Le client C2 envoie ensuite une requête de téléchargement du fichier F à une étape 14. Cette requête est envoyée au serveur de contenu SC2.

Le serveur de contenu SC2 recevant la requête vérifie si le fichier est stocké localement et, si ce n'est pas le cas, envoie une demande de récupération de fichier F au serveur de contenu SC1. La demande de téléchargement de fichier F comprend l'adresse URL1 de l'emplacement du fichier dans le système A.

Le fichier F est alors transmis, depuis le serveur de contenu SC1 vers le serveur de contenu SC2 puis vers le client C2, comme représenté en pointillés. Le serveur de contenu SC2 du système interconnecté B peut alors lui aussi stocker le fichier F.

A une étape 15, le client C2 fournit au client C1 un rapport sur l'achèvement du téléchargement du fichier F, si cela a été demandé par l'utilisateur du client C1 dans la requête initiale de l'étape 12.

Le rapport sur l'achèvement du téléchargement du fichier F est envoyé au serveur S1 par le serveur S2. Le serveur S2 peut stocker le rapport d'achèvement du téléchargement pour une interrogation de l'historique du téléchargement par des utilisateurs autorisés dans le système B. Le rapport reçu sur l'achèvement du téléchargement du fichier F est envoyé par le serveur S1 à l'utilisateur du client C1. Le rapport d'achèvement du téléchargement du fichier F provenant du client C2 peut être stocké par le serveur S1 pour une interrogation de l'historique de téléchargement par des utilisateurs autorisés dans le système A.

Ainsi dans le procédé 1a représenté aux Figures 2 et 3, l'adresse URL1 du fichier F transite du système A vers le système B et à l'intérieur du système B.

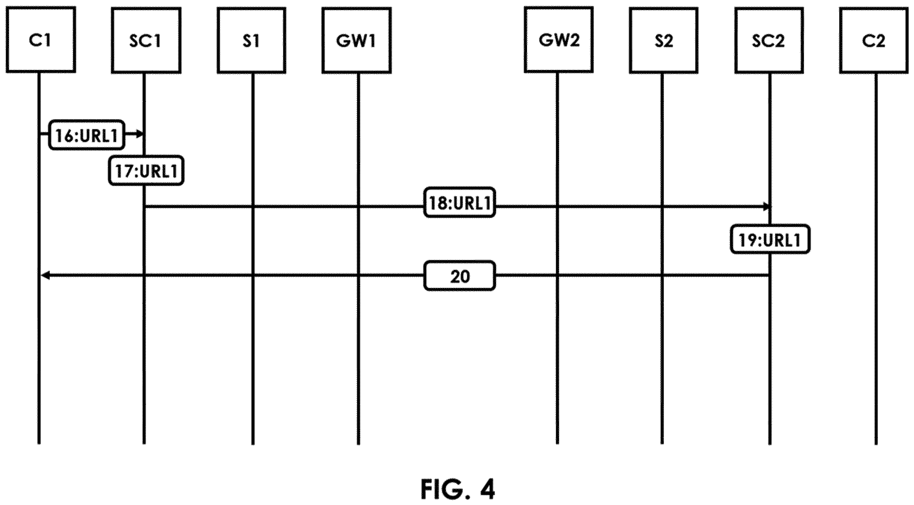

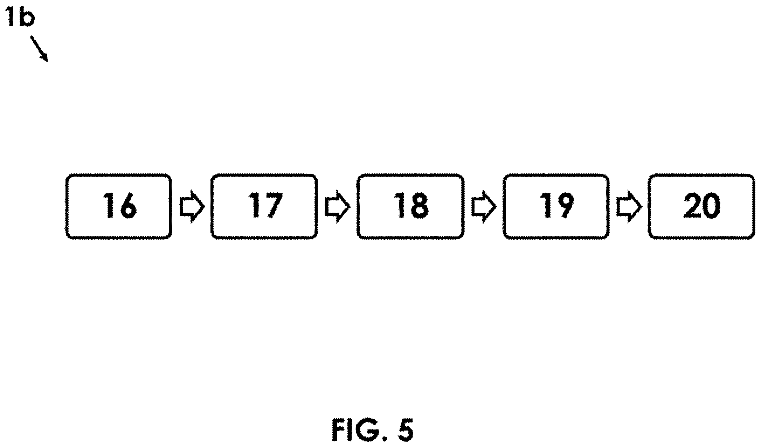

De la même façon, la Figure 4 les échanges compris dans un procédé 1b connu de suppression du fichier F dans le réseau R de la Figure 1. Le procédé 1b est aussi représenté à la Figure 5. Ce procédé est décrit dans la spécification technique 3GPP TS 23.282 (MCData Stage 2) Révision 17 Section 7.5.2.8.

Dans une première étape 16, le client MCData C1 souhaite supprimer le fichier compris dans le serveur de contenu SC1. Il envoie donc une requête http comprenant l'adresse URL1. Cette requête est reçue par le serveur de contenu SC1, qui supprime alors le fichier situé à l'adresse URL1, c'est-à-dire le fichier F, à une étape 17.

Cette requête de suppression est transmise par le serveur de contenu SC1 au serveur de contenu SC2. Cette requête comprend aussi l'adresse URL1. Le serveur de contenu SC2 supprime alors le fichier F s'il le stocke, à une étape 19. Le procédé de suppression peut comprendre une alerte AI à l'utilisateur du client C2 pour l'informer que le fichier F a été supprimé. Une information que la suppression est réalisée est alors envoyée par le serveur de contenu SC2 au serveur de contenu SC1 puis au client C1 à une étape 20.

Ainsi dans le procédé 1b représenté aux Figures 4 et 5, l'adresse URL1 du fichier F transite aussi du système A vers le système B et à l'intérieur du système B.

Cela présente un risque de sécurité pour le système A lorsque celui-ci expose à l'extérieur de son périmètre de sécurité des informations internes notamment l'adresse URL1, ou une partie de cette adresse, où est directement stocké un fichier à partager.

Il existe donc un besoin de pouvoir fournir un service de distribution de fichier dans un réseau 3GPP MCS ne présentant pas les inconvénients précités.

### RESUME DE L'INVENTION

L'invention offre une solution aux problèmes évoqués précédemment, en proposant, pour distribuer un fichier dans un réseau selon le standard 3GPP MCS, une modification d'adresse dynamique au niveau des passerelles et des serveurs de contenu et un stockage en mémoire des différentes correspondances d'adresses et des entités stockant le fichier.

Un premier aspect de l'invention concerne un procédé de distribution, par une première entité cliente, d'un fichier à destination d'au moins une deuxième entité cliente, dans un réseau de communication selon le standard 3GPP MCS « 3rd Generation Partnership Program Mission-Critical System », la première entité cliente étant comprise dans un premier système comprenant en outre un premier serveur de contenu et un premier serveur de gestion de distribution de fichier, la deuxième entité cliente étant comprise dans un deuxième système comprenant en outre un deuxième serveur de contenu et un deuxième serveur de gestion de distribution de fichier, le premier système et le deuxième système étant interconnectés par une première passerelle comprise dans le premier système et par une deuxième passerelle comprise dans le deuxième système, le fichier étant stocké par le premier serveur de contenu et étant associé à une première adresse dans le premier système, le réseau étant formé par au moins le premier système et le deuxième système, le procédé comprenant au moins les étapes de :
- Transmission, par la première entité cliente à la première passerelle, d'une requête de distribution de fichier comprenant la première adresse associée au fichier dans le premier système,
- Modification, par la première passerelle, dans la requête de distribution de fichier, de la première adresse associée au fichier dans le premier système, en une deuxième adresse associée au fichier dans le premier système,
- Stockage, par la première passerelle d'une correspondance entre la première adresse et la deuxième adresse,
- Transmission, par la première passerelle au deuxième serveur de contenu via la deuxième passerelle et le deuxième serveur de gestion de distribution de fichier, de la requête de distribution de fichier comprenant la deuxième adresse associée au fichier dans le premier système,
- Modification, par le deuxième serveur de gestion de distribution de fichier, dans la requête de distribution de fichier, de la deuxième adresse associée au fichier dans le premier système, en une troisième adresse associée au fichier dans le deuxième système,
- Stockage, par le deuxième serveur de gestion de distribution de fichier d'une correspondance entre la deuxième adresse et la troisième adresse,
- Transmission, par le deuxième serveur de contenu, de la requête de distribution de fichier comprenant la troisième adresse à la deuxième entité cliente,
- Transmission, par la deuxième entité cliente, d'une requête de téléchargement du fichier au deuxième serveur de contenu, la requête comprenant la troisième adresse,
- Réception, par la deuxième entité cliente, du fichier.

Grâce à l'invention, l'adresse du fichier au sein du premier système n'est jamais partagée avec le deuxième système. Cela est avantageusement réalisé grâce à la première passerelle qui modifie la première adresse avec une deuxième adresse propre à cette première passerelle. Ainsi, le système ne voit que l'adresse de la première passerelle et n'obtient pas d'information concernant le chemin à l'intérieur du premier système, ni concernant la composition et la topologie du premier système. Par ailleurs, la première passerelle appartenant au premier système stocke la correspondance entre les deux adresses, ce qui permet d'inverser le procédé et de faire parvenir des informations au premier système depuis le deuxième système.

En outre, le deuxième serveur de contenu modifie lui la deuxième adresse en une troisième adresse, permettant ainsi d'avoir, au sein du deuxième système, une adresse dédiée à ce fichier pourtant stocké dans le premier système. Ainsi, seule la deuxième passerelle et le deuxième serveur de contenu ont connaissance de l'adresse de la première passerelle, et le reste des équipements du deuxième système ont connaissance de la troisième adresse, dédiée au fichier dans le deuxième système. Ces équipements n'ont alors pas la moindre connaissance du premier système et la sécurité en est renforcée.

L'invention se décline par ailleurs en deux modes de réalisation décrits dans les revendications dépendantes.

Outre les caractéristiques qui viennent d'être évoquées dans les paragraphes précédents, le procédé de distribution de fichier selon un premier aspect de l'invention peut présenter une ou plusieurs caractéristiques complémentaires parmi les suivantes, considérées individuellement ou selon toutes les combinaisons techniquement possibles :
- le fichier est envoyé depuis le deuxième serveur de contenu vers l'entité cliente en réponse à la requête de téléchargement du fichier,
- dans un premier mode de réalisation du premier aspect de l'invention, le fichier est transmis par le premier serveur de contenu au deuxième serveur de contenu et le fichier est stocké par le deuxième serveur de contenu avant la transmission, par la deuxième entité cliente, de la requête de téléchargement du fichier,

- après réception de la requête de distribution du fichier et du fichier, le deuxième serveur de contenu transmet à la première passerelle, via la deuxième passerelle, une réponse indiquant que le fichier a été stocké par le deuxième serveur de contenu, la réponse comprenant la troisième adresse,
- la deuxième passerelle, à réception de la réponse :
   - crée une quatrième adresse associée au fichier stocké par le deuxième serveur de contenu dans le deuxième système,
   - modifie la troisième adresse comprise dans la réponse en la quatrième adresse créée,
   - stocke une correspondance entre la troisième adresse et la quatrième adresse,
   - transmet la réponse comprenant la quatrième adresse à la première passerelle,
   - et selon lequel la première passerelle stocke une correspondance entre la deuxième adresse et la quatrième adresse et une information de stockage du fichier par le deuxième serveur de contenu à la quatrième adresse.
- Dans un deuxième mode de réalisation du premier aspect de l'invention, le procédé de distribution de fichier comprend en outre les étapes:
   - la requête en téléchargement du fichier est transmise, par la deuxième entité cliente au deuxième serveur de contenu, puis
   - la troisième adresse comprise dans la requête en téléchargement est transformée en la deuxième adresse à partir de la correspondance entre la deuxième adresse et la troisième adresse stockée par le deuxième serveur de gestion, puis
   - la requête est transmise par le deuxième serveur de contenu à la première passerelle via la deuxième passerelle, puis
   - la deuxième adresse comprise dans la requête en téléchargement est transformée en la première adresse à partir de la correspondance entre la première adresse et la deuxième adresse stockée par la première passerelle, puis
   - la requête est transmise par la première passerelle au premier serveur de contenu, puis
   - le fichier est transmis par le premier serveur de contenu au deuxième serveur de contenu.

Un premier mode de réalisation d'un deuxième aspect de l'invention concerne un procédé de suppression du fichier distribué selon le procédé de distribution de fichier selon le premier mode de réalisation du premier aspect de l'invention, comprenant au moins les étapes de :
- Transmission, par la première entité cliente, d'une requête de suppression du fichier au premier serveur de contenu, la requête comprenant la première adresse associée au fichier au sein du premier système,
- Suppression, par le premier serveur de contenu SC1, du fichier qu'il stocke,
- Transmission, par le premier serveur de contenu, de la requête de suppression du fichier à la première passerelle,
- Conversion, par la première passerelle, de la première adresse associée au fichier dans le premier système, en la deuxième adresse associée au fichier dans le premier système, à partir de la correspondance entre la première adresse et la deuxième adresse stockée par la première passerelle,
- Suppression, par la première passerelle, de la correspondance entre la première adresse et la deuxième adresse stockée par la première passerelle,
- Modification, par la première passerelle, dans la requête de suppression du fichier, de la première adresse associée au fichier dans le premier système, en la quatrième adresse associée au fichier dans le deuxième système, à partir de l'information de stockage du fichier par le deuxième serveur de contenu à la quatrième adresse, de l'étape de conversion et de la correspondance entre la deuxième adresse et la quatrième adresse stockée par la première passerelle,
- Transmission, par la première passerelle, de la requête de suppression du fichier à la deuxième passerelle,
- Modification, par la deuxième passerelle, dans la requête de suppression du fichier, de la quatrième adresse, en la troisième adresse, à partir de la correspondance entre la quatrième adresse et la troisième adresse stockée par la deuxième passerelle,
- Suppression, par la deuxième passerelle, de la correspondance entre la quatrième adresse et la troisième adresse stockée par la deuxième passerelle,
- Transmission, par la deuxième passerelle, de la requête de suppression du fichier au deuxième serveur de contenu via le deuxième serveur de gestion,
- Suppression, par le deuxième serveur de gestion, de la correspondance entre la deuxième adresse et la troisième adresse stockée par le deuxième serveur de gestion.

Dans une variante, le procédé de suppression du fichier comprend en outre une étape de suppression, par le deuxième serveur de contenu, du fichier qu'il stocke.

Un deuxième mode de réalisation du deuxième aspect de l'invention concerne un procédé de suppression du fichier distribué selon le deuxième mode de réalisation du premier aspect de l'invention comprenant au moins les étapes de :
- Transmission, par la première entité cliente, d'une requête de suppression du fichier au premier serveur de contenu, la requête comprenant la première adresse associée au fichier au sein du premier système,
- Suppression, par le premier serveur de contenu SC1, du fichier qu'il stocke,
- Transmission, par le premier serveur de contenu, de la requête de suppression du fichier à la première passerelle,
- Conversion, par la première passerelle,
- Suppression, par la première passerelle, de la correspondance entre la première adresse et la deuxième adresse stockée par la première passerelle,
- Modification, par la première passerelle, dans la requête de suppression du fichier, de la première adresse associée au fichier dans le premier système, en la deuxième adresse associée au fichier dans le premier système, à partir de la correspondance entre la première adresse et la deuxième adresse stockée par la première passerelle,
- Transmission, par la première passerelle au deuxième serveur de contenu, de la requête de suppression du fichier via la deuxième passerelle et le deuxième serveur de gestion,
- Suppression, par le deuxième serveur de gestion, de la correspondance entre la deuxième adresse et la troisième adresse stockée par le deuxième serveur de gestion.

Un autre aspect de l'invention concerne un réseau de communication selon le standard 3GPP MCS « 3rd Generation Partnership Program Mission-Critical System », le réseau de communication étant formé par au moins :
- un premier système comprenant au moins une première entité cliente, un premier serveur de contenu et un premier serveur de gestion de distribution de fichier,
- un deuxième système comprenant au moins une deuxième entité cliente, un deuxième serveur de contenu et un deuxième serveur de gestion de distribution de fichier,
- le premier système et le deuxième système étant interconnectés par une première passerelle comprise dans le premier système et par une deuxième passerelle comprise dans le deuxième système, le réseau de communication étant configuré pour mettre en oeuvre le procédé de distribution de fichier selon l'invention et le procédé de suppression de fichier selon l'invention.

Selon un autre aspect, l'invention concerne un produit programme d'ordinateur comprenant des instructions qui conduisent le réseau selon l'invention à exécuter les étapes du procédé selon l'invention et du procédé de suppression de fichier selon l'invention.

Selon un autre aspect, l'invention concerne un support lisible par ordinateur, sur lequel est enregistré le produit programme d'ordinateur selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre une représentation schématique d'un réseau selon le standard 3GPP MCS,
- La figure 2 montre une représentation schématique des échanges d'un procédé de distribution de fichier connu au sein de systèmes interconnectés dans le standard 3GPP MCS,
- La figure 3 montre une représentation schématique d'un procédé de distribution de fichier connu au sein de systèmes interconnectés dans le standard 3GPP MCS,
- La figure 4 montre une représentation schématique des échanges d'un procédé de suppression de fichier connu au sein de systèmes interconnectés dans le standard 3GPP MCS,
- La figure 5 montre une représentation schématique d'un procédé de suppression de fichier connu au sein de systèmes interconnectés dans le standard 3GPP MCS,
- La figure 6 montre une représentation schématique des échanges d'un procédé de distribution de fichier selon un premier mode de réalisation de l'invention au sein de systèmes interconnectés dans le standard 3GPP MCS,
- La figure 7 montre une représentation schématique d'un procédé de distribution de fichier selon un premier mode de réalisation de l'invention au sein de systèmes interconnectés dans le standard 3GPP MCS,
- La figure 8 montre une représentation schématique des échanges d'un procédé de distribution de fichier selon un deuxième mode de réalisation de l'invention au sein de systèmes interconnectés dans le standard 3GPP MCS,
- La figure 9 montre une représentation schématique d'un procédé de distribution de fichier selon un deuxième mode de réalisation de l'invention au sein de systèmes interconnectés dans le standard 3GPP MCS,
- La figure 10 montre une représentation schématique d'un procédé de suppression de fichier selon un premier mode de réalisation de l'invention au sein de systèmes interconnectés dans le standard 3GPP MCS,
- La figure 11 montre une représentation schématique d'un procédé de suppression de fichier selon un deuxième mode de réalisation de l'invention au sein de systèmes interconnectés dans le standard 3GPP MCS.

### DESCRIPTION DETAILLEE

Sauf précision contraire, un même élément apparaissant sur des figures différentes présente une référence unique.

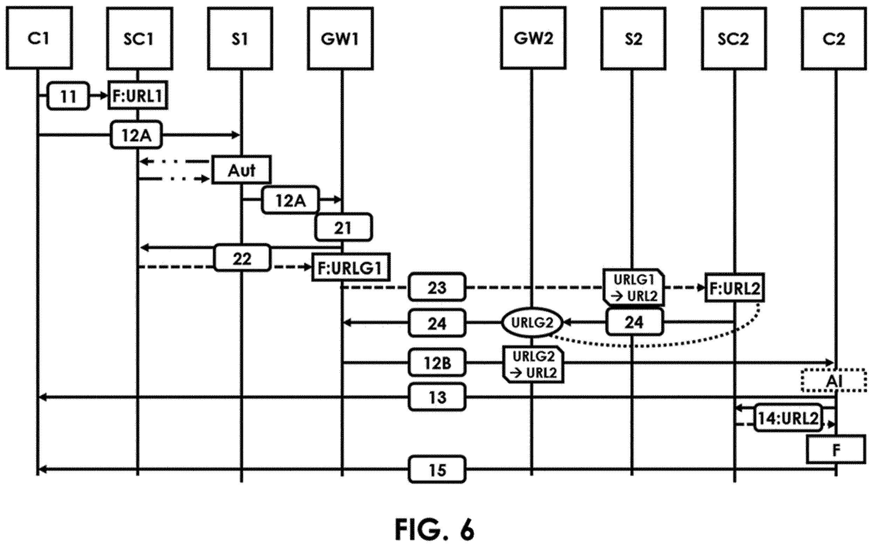

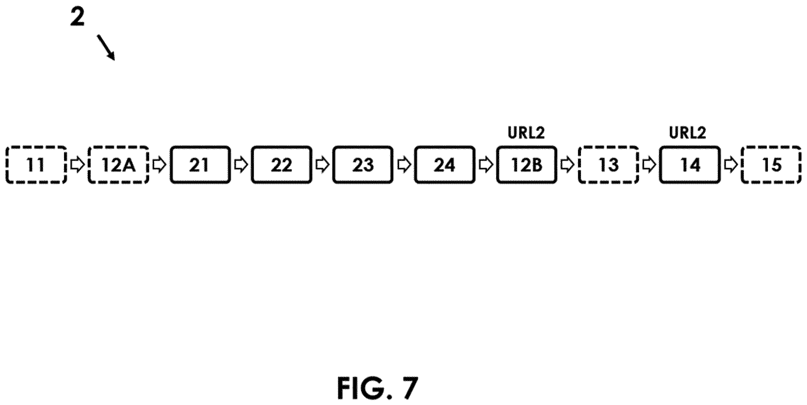

Les Figures 6 et 7 montrent toutes les deux une représentation schématique du procédé de distribution de fichier selon un premier mode de réalisation de l'invention. Les Figures 6 et 7 montrent une représentation différente du même procédé. Le procédé selon un premier mode de réalisation de l'invention est mis en oeuvre par le réseau R représenté à la Figure 1.

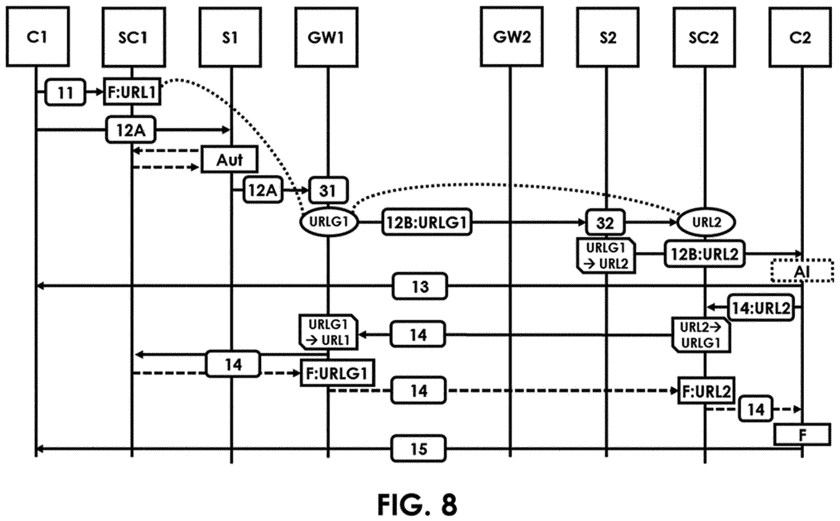

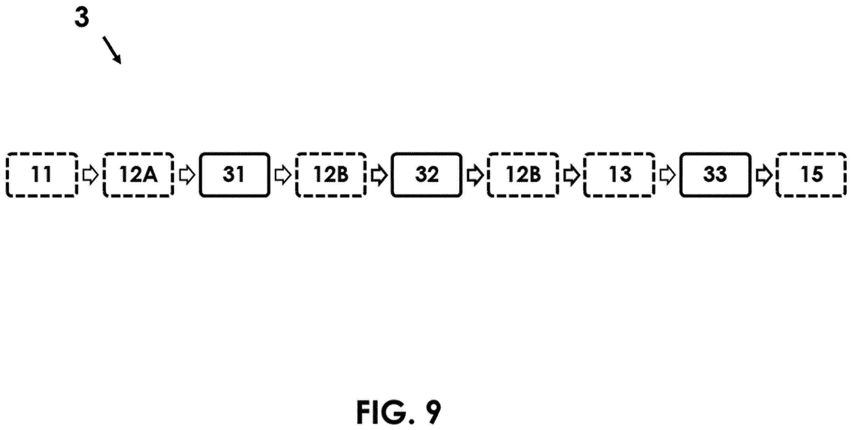

Les Figures 8 et 9 montrent toutes les deux une représentation schématique du procédé de distribution de fichier selon un deuxième mode de réalisation de l'invention. Les Figures 6 et 7 montrent une représentation différente du même procédé. Le procédé selon un premier mode de réalisation de l'invention est mis en oeuvre par le réseau R représenté à la Figure 1.

Le procédé selon l'invention est un procédé de distribution de fichier au sein de systèmes interconnectés formant un réseau selon le standard 3GPP MCS.

Le réseau R représenté à la Figure 1 mettant en oeuvre les procédés selon l'invention est un réseau selon le standard 3GPP MCS, c'est-à-dire qu'il est implémenté en suivant les spécifications définies par le standard 3GPP MCS.

Ce réseau R est formé par le premier système A et le deuxième système B. Les systèmes A et B sont interconnectés, c'est-à-dire qu'ils sont liés par des passerelles, une première passerelle GW1 appartenant au premier système A et une deuxième passerelle GW2 appartenant au deuxième système B. L'invention n'est pas limitée à ces deux systèmes interconnectés, et couvre tout réseau comprenant une pluralité de systèmes interconnectés. Les deux passerelles communiquent entre elles selon tout protocole d'échange connu, par exemple via des échanges selon le protocole HTTP.

Le premier système A comprend une première entité cliente C1, un premier serveur de contenu SC1, un premier serveur de gestion S1 et la première passerelle GW1. Le deuxième système B comprend deuxième entité cliente C2, le deuxième serveur de contenu SC2, le deuxième serveur de gestion S2 et la deuxième passerelle GW2. Les passerelles GW1 et GW2 peuvent être mises en oeuvre par des serveurs.

Une entité cliente est un dispositif, préférentiellement un équipement utilisateur (UE) comprenant au moins une mémoire et au moins un processeur, la mémoire comprenant des instructions qui, lorsqu'elles sont exécutées par le processeur, conduisent l'équipement utilisateur à mettre en oeuvre les actions qui lui sont attribuées dans la suite de la description. Préférentiellement, les entités clientes comprennent un dispositif d'affichage, afin d'afficher le fichier F distribué, par exemple comprenant du texte, une photo, ou tout autre fichier. De la même manière, les différents serveurs, comprenant les serveurs de contenu, de gestion de distribution de fichier, et optionnellement les passerelles sont des dispositifs comprenant au moins une mémoire et au moins un processeur, la mémoire comprenant des instructions qui, lorsqu'elles sont exécutées par le processeur, conduisent le serveur à mettre en oeuvre les actions qui lui sont attribuées dans la suite de la description. Les serveurs et les entités clientes sont reliées entre eux et forment le réseau R tel que celui représenté à la Figure 1, ce réseau mettant en oeuvre des communications filaires, sans fil, ou toute combinaison.

Un serveur de contenu est un serveur MCData destiné à stocker des fichiers F, tel que défini par le standard 3GPP MCS sous la dénomination « MCData content server ». Un serveur de gestion de distribution de fichier est tout serveur selon le standard 3GPP MCS mettant en oeuvre une fonction de distribution de fichier FD. Le serveur de contenu et le serveur de gestion de distribution de fichier, aussi appelé par la suite « serveur de gestion » par simplicité, peuvent être confondus, c'est-à-dire colocalisés dans un même serveur physique, et être mis en oeuvre par un serveur comprenant une fonction de distribution de fichier FD et une fonction de stockage de fichiers.

Le procédé de distribution de fichier selon l'invention et le procédé de suppression de fichier selon l'invention peuvent être mis en oeuvre pour toute communication MCData FD (pour « File Distribution »), « on-network », c'est-à-dire en utilisant une infrastructure réseau LTE (pour « Long Term Evolution ») et « off-network », c'est-à-dire sans utiliser d'infrastructure réseau LTE :
- one to one file distribution (distribution de fichier un-à-un) en utilisant le protocole HTTP,
- one to one file distribution (distribution de fichier un-à-un) en utilisant le plan de médias du service MCData du standard 3GPP MCS,
- group standalone file distribution (distribution de fichier en groupe) en utilisant le protocole HTTP,
- group standalone file distribution (distribution de fichier en groupe) en utilisant le plan de médias du service MCData du standard 3GPP MCS.

En effet, le procédé de distribution de fichier selon l'invention proposé, bien que présenté en communication entre deux entités clientes, est également applicable dans le cas d'une communication de groupe MCData impliquant un ou plusieurs systèmes MCData interconnectés. De la même manière, le procédé de suppression de fichier selon l'invention, bien que présenté en communication entre deux entités clientes, est également applicable dans le cas d'une communication de groupe MCData impliquant un ou plusieurs systèmes MCData interconnectés.

Le procédé de distribution de fichier selon l'invention peut être mis en oeuvre selon deux modes de réalisation. Dans un premier mode de réalisation, appelé mode « PUSH » pour « pousser » en français, le fichier F est d'abord envoyé vers le deuxième serveur de contenu SC2 à l'initiative de la première passerelle GW1, puis la deuxième entité cliente C2 requiert l'accès au fichier F directement auprès du deuxième serveur de contenu SC2. Dans un deuxième mode de réalisation, appelé mode « PULL » pour « tirer » en français, le fichier F est envoyé au deuxième système seulement en réponse à la demande de la deuxième entité cliente C2. De la même manière, le procédé de suppression de fichier selon l'invention est mis en oeuvre selon le premier mode de réalisation « PUSH » lorsque le procédé de distribution est mis en oeuvre selon le premier mode de réalisation « PUSH » et le procédé de suppression de fichier selon l'invention est mis en oeuvre selon le deuxième mode de réalisation « PULL » lorsque le procédé de distribution est mis en oeuvre selon le deuxième mode de réalisation « PULL ».

Premier mode de réalisation : mode « PUSH »

Le procédé de distribution de fichier selon un premier mode de réalisation de l'invention dit « PUSH » va maintenant être décrit. Le procédé 2 selon le premier mode de réalisation de l'invention est représenté aux Figures 6 et 7.

La Figure 6 représente les échanges entre les différentes entités impliquées dans le procédé de distribution de fichier 2, et la Figure 7 représente le procédé de distribution de fichier 2.

Le procédé de distribution de fichier 2 comprend les étapes 11 à 15 du procédé de distribution de fichier 1a de l'état de la technique, dont certaines prennent en compte une adresse du fichier différente par rapport à l'art antérieur, et comprend des étapes supplémentaires.

Le procédé de distribution de fichier 2 comprend la première étape 11 de chargement du fichier F sur le premier serveur de contenu SC1, comme décrit dans la spécification technique 3GPP TS 23.282 (MCData Stage 2) Révision 17 Section 7.5.2.2. Cette première étape peut être optionnelle, car le fichier F peut déjà se trouver sur le premier serveur de contenu SC1.

Le procédé de distribution de fichier 2 comprend la deuxième étape 12 divisée en une première partie 12A et une deuxième partie 12B. La première partie 12A comprend la transmission d'une requête de distribution du fichier F depuis la première entité cliente C1 vers la première passerelle GW1 via le premier serveur de contenu SC1 et le premier serveur de gestion S1. La requête de distribution du fichier comprend une première adresse URL1. L'adresse URL1 est préférentiellement de type URL (pour « Uniform Resource Locator ») et est associée au fichier F dans le premier système A, c'est-à-dire qu'elle indique où est stocké le fichier F dans le premier système A. Comme dans l'art antérieur, le premier serveur de gestion S1 réalise, optionnellement, une étape Aut d'autorisation de la requête et de vérification de la disponibilité du fichier F à la première adresse URL1 comprise dans la requête. La requête est alors transmise à la première passerelle GW1 par le premier serveur de gestion S1.

La première passerelle GW1 met alors en oeuvre une étape 21 de modification, par la première passerelle GW1, dans la requête de distribution de fichier, de la première adresse URL1 associée au fichier F dans le premier système A, en une deuxième adresse URLG1 associée au fichier F dans le premier système A. La deuxième adresse URLG1 est spécifique à la première passerelle GW1, c'est-à-dire qu'elle désigne un emplacement de stockage de la première passerelle GW1 et/ou un chemin menant à la première passerelle GW1. Par la même occasion, la première passerelle GW1 stocke une correspondance entre la première adresse URL1 et la deuxième adresse URLG1.

Dans toute la demande, une « correspondance entre deux adresses » est au moins une donnée permettant à une entité de mettre en relation les deux adresses. Cela peut être réalisé en stockant les deux adresses dans une base de données sur une même ligne ou dans une même colonne, ou en ajoutant dans la base de données un indicateur à chaque adresse permettant de lier les deux adresses, un indicateur était une donnée de type booléen, texte ou tout autre type de donnée. Dans toute la demande, une entité « stocke » une donnée telle qu'une correspondance ou un fichier en enregistrant la donnée sur un support physique qu'elle comprend ou auquel elle a accès. Cette donnée ou ce fichier peut par exemple être accédé via une base de données.

La première passerelle GW1 met aussi en oeuvre une étape 22 de récupération du fichier F. En effet, dans le premier mode de réalisation « PUSH », le fichier F est envoyé au deuxième serveur de contenu SC2 du deuxième système B en même temps qu'une requête, pendant le processus d'établissement des différentes adresses. Cette étape 22, comprise dans le procédé de distribution de fichier 2, est mise oeuvre par exemple par l'envoi, par la première passerelle GW1 au premier serveur de contenu SC1 d'une requête de récupération de fichier F comprenant la première adresse URL1 du fichier F au sein du premier système A. Cette requête peut être du type « MCData file retrieve request » comme défini par le standard 3GPP MCS. En réponse à cette requête, le premier serveur de contenu SC1 transmet à la première passerelle GW1 le fichier F, qui est alors stocké par la première passerelle GW1 à la deuxième adresse URLG1.

Le fichier F est alors transmis, dans une étape 23, par la première passerelle GW1 au deuxième serveur de contenu SC2. Cela peut être réalisé en transmettant le fichier F avec une requête « MCData FD Upload data request » comme défini par le standard 3GPP MCS. Cette étape 23 est réalisée en transmettant la requête de la première passerelle GW1 vers la deuxième passerelle GW2 puis de la deuxième passerelle GW2 vers le deuxième serveur de gestion S2, puis du deuxième serveur de gestion S2 vers le deuxième serveur de contenu SC2. Pendant cette transmission 23, le deuxième serveur de gestion S2 crée une troisième adresse URL2 associée au fichier F dans le deuxième système B et crée et stocke une correspondance entre la deuxième adresse URLG1 et une troisième adresse URL2. La troisième adresse URL2 est spécifique au deuxième serveur de contenu SC2, c'est-à-dire qu'elle désigne un emplacement de stockage du deuxième serveur de contenu SC2 et/ou un chemin menant au fichier F stocké sur le deuxième serveur de contenu SC2.

Le fichier F est alors stocké par le deuxième serveur de contenu SC2, comme représenté par le rectangle intitulé « F:URL2 » à la Figure 6.

Le procédé de distribution de fichier 2 comprend ensuite une étape 24 de transmission, par le deuxième serveur de contenu SC2 à la première passerelle GW1, d'une réponse indiquant que le fichier F a bien été stocké par le deuxième serveur de contenu SC2. Cette réponse est d'abord transmise à la deuxième passerelle GW2, qui crée alors une quatrième adresse URLG2. La deuxième passerelle GW2 stocke aussi une correspondance entre la troisième adresse URL2 et la quatrième adresse URLG2. Ainsi, tout système extérieur au deuxième système B peut accéder au fichier F stocké par le deuxième serveur de contenu SC2 à la troisième adresse URL2 sans risque de sécurité pour le deuxième système B. Par exemple, le premier système A peut accéder au fichier F stocké par deuxième serveur de contenu SC2 en utilisant la quatrième adresse URLG2. Un autre système non représenté peut aussi accéder au fichier F stocké par le deuxième serveur de contenu SC2 à la troisième adresse URL2 en utilisant la quatrième adresse URLG2. La deuxième passerelle GW2 recevant une requête comprenant la quatrième adresse URLG2 réalisera alors la conversion de la quatrième adresse URLG2 en la troisième adresse URL2.

La deuxième passerelle GW2 transmet la réponse indiquant que le fichier F a bien été stocké par le deuxième serveur de contenu SC2 à la première passerelle GW1. Cette réponse comprend la quatrième adresse URLG2, la troisième adresse URL2 comprise dans la réponse ayant été modifiée par la deuxième passerelle GW2 en la quatrième adresse URLG2. La première passerelle GW1 stocke alors une information de stockage du fichier F par le deuxième système B à la quatrième adresse URLG2.

Comme dans l'art antérieur, la première passerelle GW1 transmet alors une requête de distribution de fichier dans une deuxième partie de l'étape 12 appelée 12B à destination de la deuxième entité cliente C2. Ainsi, le procédé de distribution de fichier procédé de distribution de fichier 2 est transparent pour la deuxième entité cliente C2 et apparaît, pour la deuxième entité cliente C2, identique au procédé de l'art antérieur. Ce qui diffère de l'art antérieur dans la deuxième partie 12B de l'étape 12 est que l'adresse du fichier F comprise dans la requête de distribution de fichier est l'adresse du fichier F dans le deuxième système B. La requête de distribution de fichier transmise par la première passerelle GW1 comprend la quatrième adresse URLG2 car c'est cette adresse que la première passerelle GW1 connait pour le fichier F dans le deuxième système B et car la requête de distribution du fichier permet d'informer le deuxième système B de la disponibilité et de l'emplacement du fichier F.

La deuxième passerelle GW2, recevant cette requête, réalise la conversion de la quatrième adresse URLG2 en la troisième adresse URL2 à partir de la correspondance entre la quatrième adresse URLG2 et la troisième adresse URL2 qu'elle stocke, puis transmets la requête de distribution de fichier à destination de la deuxième entité cliente C2 via le deuxième serveur de gestion S2 et le deuxième serveur de contenu SC2.

La deuxième entité cliente C2 émet alors optionnellement une alerte Al, informant un utilisateur de la deuxième entité cliente C2 que le fichier F est disponible, comme dans l'art antérieur, par exemple sur un écran de la deuxième entité cliente C2.

La deuxième entité cliente C2 réalise alors une étape 13 de réponse à la première entité cliente C1, la réponse comprenant une acceptation ou un refus de l'accès au fichier F par la deuxième entité cliente C2. Cette étape 13 est identique à l'étape 13 de réponse de l'état de la technique.

La deuxième entité cliente C2 réalise ensuite une étape 14 de transmission d'une requête de téléchargement du fichier F au deuxième serveur de contenu SC2. Cette requête est la même requête « MCData download data request » comme défini par le standard 3GPP MCS que la requête de l'étape 14 de l'état de la technique. La différence avec l'état de la technique est que la requête en téléchargement du fichier F comprend la troisième adresse URL2, à la place d'une adresse construite à partir de, et contenant entièrement la première adresse URL1.

Au contraire de l'état de la technique, le deuxième serveur de contenu SC2 peut traiter directement la requête en téléchargement du fichier F car le deuxième serveur de contenu SC2 stocke le fichier F à la troisième adresse URL2 comprise dans la requête en téléchargement du fichier F émise par la deuxième entité cliente C2. Le deuxième serveur de contenu SC2 envoie alors directement le fichier F qu'il stocke à la troisième adresse URL2. Ainsi, les échanges entre systèmes interconnectés sont limités, limitant les risques de sécurité. La deuxième entité cliente C2 n'a pas connaissance de la deuxième adresse URLG1 ni de la première adresse URL1, et la deuxième entité cliente C2 et son utilisateur n'ont donc aucune information sur le premier système A interconnecté avec le deuxième système B.

A l'étape 14, la deuxième entité cliente C2 reçoit ensuite le fichier F. Le procédé de distribution de fichier 2 peut comprendre une étape supplémentaire 15 dans laquelle la deuxième entité cliente C2 fournit un rapport de téléchargement à la première entité cliente C1.

Le procédé de distribution de fichier 2 selon un premier mode de réalisation « PUSH » de l'invention permet ainsi de limiter les risques de sécurité tout en étant transparent pour les première entité cliente C1 et deuxième entité cliente C2. De plus, le procédé de distribution de fichier 2 permet de distribuer le fichier à un système extérieur interconnecté au système qui stocke le fichier F à l'origine, et permet de mettre en place, dans le système extérieur interconnecté, les mêmes sécurités d'adressage pour l'accès au fichier stocké dans le système extérieur interconnecté après sa distribution. Ainsi, les deux systèmes interconnectés ne sont pas soumis au risque de sécurité de l'état de l'art.

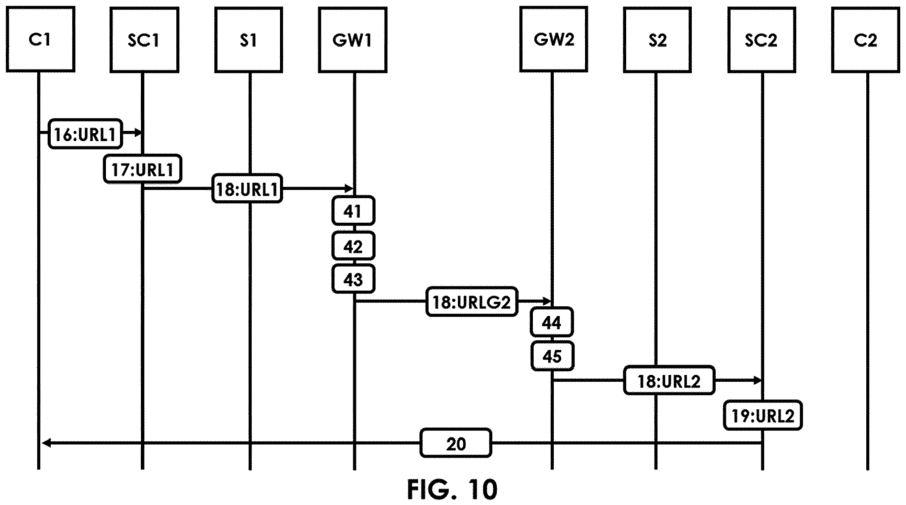

La Figure 10 montre une représentation schématique d'un procédé de suppression de fichier F, dans lequel le fichier F a été distribué selon le procédé de distribution de fichier 2 dans le premier mode de réalisation « PUSH » selon l'invention.

Dans une première étape 16, la première entité cliente C1 souhaite supprimer le fichier F compris dans le premier serveur de contenu SC1 et dans tout serveur de contenu d'autres systèmes interconnectés qui stockerait ce fichier F suite à la mise en oeuvre du procédé de distribution de fichier 2 dans le premier mode de réalisation « PUSH ». la première entité cliente C1 envoie donc une requête de suppression du fichier F comprenant la seule adresse du fichier F qu'il connait, c'est-à-dire la première adresse URL1. Cette requête est reçue par le serveur de contenu SC1, qui supprime alors le fichier F situé à la première adresse URL1, dans une étape 17.

Cette requête de suppression est transmise par le serveur de contenu SC1 à la première passerelle GW1, qui réalise alors, à une étape 41, une conversion de la première adresse URL1 en la deuxième adresse URLG1, à partir de la correspondance entre la première adresse URL1 et la deuxième adresse URLG1 stockée par la première passerelle GW1. Cette correspondance stockée par la première passerelle GW1 est ensuite supprimée, à l'étape 42, par la première passerelle GW1.

La première passerelle GW1 modifie ensuite, dans la requête de suppression du fichier F, la première adresse URL1 en la quatrième adresse URLG2. Cette modification est réalisée à partir de :
- l'étape de conversion, qui a transformé la première adresse URL1 en deuxième adresse URLG1,
- l'information de stockage du fichier F par le deuxième serveur de contenu SC2 à la quatrième adresse URLG2, permettant à la première passerelle GW1 de savoir que le fichier F est stocké par le deuxième serveur de contenu SC2,
- et de la correspondance entre la quatrième adresse URLG2 et la deuxième adresse URLG1 stockée par la première passerelle GW1, car la première passerelle GW1 sait que le fichier F à supprimer est dans le deuxième système B et que le deuxième système B comprend la deuxième passerelle GW2 à la quatrième adresse URLG2.

La requête en suppression du fichier F est ensuite transmise à chaque système interconnecté stockant le fichier F dont la première passerelle GW1 a connaissance, c'est-à-dire dans cet exemple le deuxième système B. La requête est donc transmise à la deuxième passerelle GW2 dans une étape 18, la requête en suppression du fichier F comprenant la quatrième adresse URLG2.

La deuxième passerelle GW2, à réception de cette requête, modifie, à l'étape 44, dans la requête, la quatrième adresse URLG2 en la troisième adresse URL2 à partir de la correspondance entre la quatrième adresse URLG2 et la troisième adresse troisième adresse URL2 qu'elle stocke. Cette correspondance est ensuite supprimée par la deuxième passerelle GW2 à l'étape 45.

La deuxième passerelle GW2 transmet la requête de suppression du fichier F au deuxième serveur de contenu SC2 via le deuxième serveur de gestion S2, c'est-à-dire que la requête de suppression du fichier F est transmise au deuxième serveur de gestion S2 qui la transmet à son tour au deuxième serveur de contenu SC2.

A réception de cette requête, le deuxième serveur de gestion S2 supprime la correspondance entre la deuxième adresse URLG1 et la troisième adresse URL2 qu'il stocke (non représenté).

A réception de cette requête, à une étape 19, le deuxième serveur de contenu SC2 supprime le fichier F qu'il stocke.

Le procédé de suppression selon le premier mode de réalisation « PUSH » peut comprendre une alerte AI à l'utilisateur de la deuxième entité cliente C2 pour l'informer que le fichier F a été supprimé. Optionnellement, une information que la suppression est réalisée est ensuite envoyée par le serveur de contenu SC2 au serveur de contenu SC1 puis à la C1 à une étape 20.

Grâce au procédé de suppression selon le premier mode de réalisation « PUSH », toutes les correspondances stockées par des entités du réseau R traitant d'adresses liées au fichier F sont supprimées. De la même façon, le fichier F est supprimé du premier système A et toute copie du fichier F sur tout systèmes compris dans le réseau R est supprimée. La requête de suppression ne fait jamais paraître l'adresse du fichier dans un système à un autre système interconnecté, résolvant ainsi les problèmes de sécurité de l'art antérieur.

### Deuxième mode de réalisation : mode « PULL »

Le procédé de distribution de fichier selon un deuxième mode de réalisation de l'invention dit « PULL » va maintenant être décrit. Le procédé 3 selon le deuxième mode de réalisation de l'invention est représenté aux Figures 8 et 9.

La Figure 8 représente les échanges entre les différentes entités impliquées dans le procédé de distribution de fichier 3, et la Figure 9 représente le procédé de distribution de fichier 3.

Le procédé de distribution de fichier 3 comprend les étapes 11 à 15 du procédé de distribution de fichier 1a de l'état de la technique, dont certaines prennent en compte une adresse du fichier différente par rapport à l'art antérieur, et comprend des étapes supplémentaires.

Le procédé de distribution de fichier 3 comprend la première étape 11 de chargement du fichier F sur le premier serveur de contenu SC1, comme décrit dans la spécification technique 3GPP TS 23.282 (MCData Stage 2) Révision 17 Section 7.5.2.2. Cette première étape peut être optionnelle, car le fichier F peut déjà se trouver sur le premier serveur de contenu SC1.

Le procédé de distribution de fichier 2 comprend la deuxième étape 12 divisée en une première partie 12A et une deuxième partie 12B. La première partie 12A comprend la transmission d'une requête de distribution du fichier F depuis la première entité cliente C1 vers la première passerelle GW1 via le premier serveur de contenu SC1 et le premier serveur de gestion S1. La requête de distribution du fichier comprend une première adresse URL1. L'adresse URL1 est préférentiellement de type URL (pour « Uniform Resource Locator ») et est associée au fichier F dans le premier système A, c'est-à-dire qu'elle indique où est stocké le fichier F dans le premier système A. Comme dans l'art antérieur, le premier serveur de gestion S1 réalise, optionnellement, une étape Aut d'autorisation de la requête et de vérification de la disponibilité du fichier F à la première adresse URL1 comprise dans la requête. La requête est alors transmise à la première passerelle GW1 par le premier serveur de gestion S1.

La première passerelle GW1 met alors en oeuvre une étape 31 de modification, par la première passerelle GW1, dans la requête de distribution de fichier, de la première adresse URL1 associée au fichier F dans le premier système A, en une deuxième adresse URLG1 associée au fichier F dans le premier système A. La deuxième adresse URLG1 est spécifique à la première passerelle GW1, c'est-à-dire qu'elle désigne un emplacement de stockage de la première passerelle GW1 et/ou un chemin menant à la première passerelle GW1. Par la même occasion, la première passerelle GW1 stocke une correspondance entre la première adresse URL1 et la deuxième adresse URLG1.

Dans le deuxième mode de réalisation « PULL », au contraire du premier mode « PUSH », la première passerelle GW1 ne récupère pas le fichier F à ce stade du procédé. Dans une variante au deuxième mode de réalisation « PULL », la première passerelle GW1 peut requérir auprès du premier serveur de contenu SC1 l'accès au fichier F et stocker temporairement le fichier F en attendant une requête en téléchargement d'une entité cliente d'un système interconnecté avec le premier système A.

Comme dans l'art antérieur, la première passerelle GW1 transmet alors une requête de distribution de fichier dans une deuxième partie de l'étape 12 appelée 12B à destination de la deuxième entité cliente C2. Ainsi, le procédé de distribution de fichier procédé de distribution de fichier 2 est transparent pour la deuxième entité cliente C2 et apparaît, pour la deuxième entité cliente C2, identique au procédé de l'art antérieur. Ce qui diffère de l'art antérieur dans la deuxième partie 12B de l'étape 12 est que l'adresse du fichier F comprise dans la requête de distribution de fichier est l'adresse de la première passerelle GW1, car la requête de distribution du fichier permet d'informer le deuxième système B de la disponibilité et de l'emplacement du fichier F, et car la première adresse URL1 a été cachée par la première passerelle GW1.

La deuxième passerelle GW2, recevant cette requête, la transmet à destination de la deuxième entité cliente C2 via le deuxième serveur de gestion S2 et le deuxième serveur de contenu SC2.

Le deuxième serveur de gestion S2 recevant cette requête crée une troisième adresse URL2 associée au fichier F dans le deuxième système B à l'étape 32 et crée et stocke une correspondance entre la deuxième adresse URLG1 et une troisième adresse URL2. La troisième adresse URL2 est spécifique au deuxième serveur de contenu SC2, c'est-à-dire qu'elle désigne un emplacement de stockage du deuxième serveur de contenu SC2 et/ou un chemin menant au deuxième serveur de contenu SC2. Le deuxième serveur de gestion S2 modifie la deuxième adresse URLG1 en la troisième adresse URL2 dans la requête en distribution de fichier F et la transmet à destination de la deuxième entité cliente C2.

La deuxième entité cliente C2, recevant cette requête comprenant la troisième adresse URL2 émet alors optionnellement une alerte Al, informant un utilisateur de la deuxième entité cliente C2 que le fichier F est disponible, comme dans l'art antérieur, par exemple sur un écran de la deuxième entité cliente C2.

La deuxième entité cliente C2 réalise alors une étape 13 de réponse à la première entité cliente C1, la réponse comprenant une acceptation ou un refus de l'accès au fichier F par la deuxième entité cliente C2. Cette étape 13 est identique à l'étape 13 de réponse de l'état de la technique.

La deuxième entité cliente C2 réalise ensuite une étape 14 de transmission d'une requête de téléchargement du fichier F au deuxième serveur de contenu SC2. Cette requête est la même requête « MCData download data request » comme défini par le standard 3GPP MCS que la requête de l'étape 14 de l'état de la technique. La différence avec l'état de la technique est que la requête en téléchargement du fichier F comprend la troisième adresse URL2, à la place de la première adresse URL1.

Au contraire du premier mode de réalisation « PUSH », dans le deuxième mode de réalisation « PULL » le deuxième serveur de contenu SC2 ne stocke pas le fichier F à la troisième adresse troisième adresse URL2, et transmet donc la requête à destination du premier système A. Avant cela, le deuxième serveur de contenu SC2 modifie la troisième adresse URL2 en la deuxième adresse URLG1 dans la requête, grâce à la correspondance entre la troisième adresse URL2 et la deuxième adresse URLG1 stockée par le deuxième serveur de gestion S2.

La requête est transmise par le deuxième serveur de contenu SC2 à destination du premier serveur de contenu SC1 via le deuxième serveur de gestion S2, via la deuxième passerelle GW2, via la première passerelle GW1 et via le premier serveur de gestion S1.

La première passerelle GW1 recevant cette requête modifie la deuxième adresse URLG1 en première adresse URL1 grâce à la correspondance entre la deuxième adresse URLG1 et la première adresse URL1 qu'elle stocke. La première passerelle GW1 transmet alors cette requête au premier serveur de contenu SC1, qui stocke le fichier F.

Le premier serveur de contenu SC1 stockant ce fichier F y accède en suivant la première adresse URL1.

Le premier serveur de contenu SC1 transmet le fichier F à destination de la deuxième entité cliente C2. Pour cela, le fichier F est envoyé avec une réponse à la requête de téléchargement du fichier F.

Le fichier F est transmis via la première passerelle GW1, qui peut stocker temporairement le fichier F. La deuxième adresse URLG1 est alors l'adresse permettant d'accéder au fichier F par un système extérieur interconnecté avec le premier système A.

Toujours à l'étape 14, la deuxième entité cliente C2 reçoit ensuite le fichier F, qui a transité via la deuxième passerelle GW2 et le deuxième serveur de contenu SC2. Le procédé de distribution de fichier 3 peut comprendre une étape supplémentaire 15 dans laquelle la deuxième entité cliente C2 fournit un rapport de téléchargement à la première entité cliente C1.

Le procédé de distribution de fichier 3 selon un deuxième mode de réalisation « PULL » de l'invention permet ainsi de limiter les risques de sécurité tout en étant transparent pour les première entité cliente C1 et deuxième entité cliente C2. De plus, le procédé de distribution de fichier 3 permet de ne conserver le fichier F que sur des serveurs au sein du premier système A, au contraire du premier mode de réalisation « PUSH ».

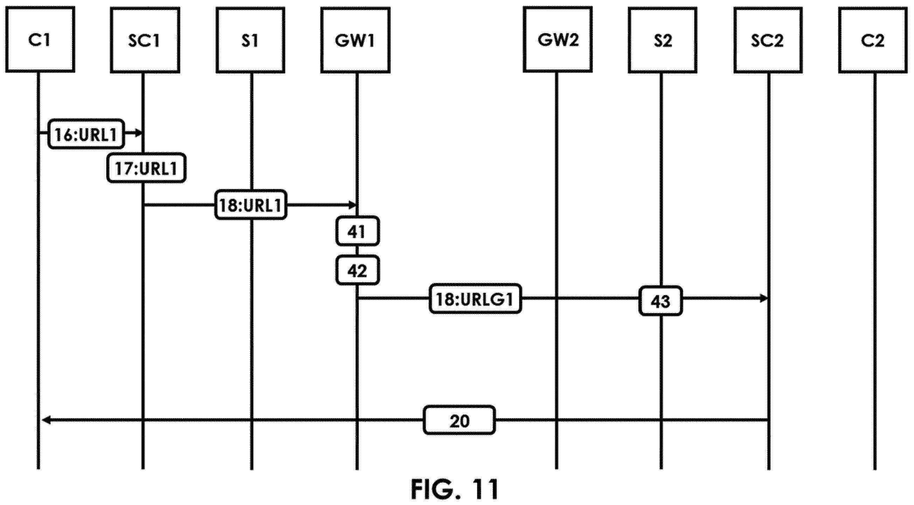

La Figure 11 montre une représentation schématique d'un procédé de suppression de fichier F, dans lequel le fichier F a été distribué selon le procédé de distribution de fichier 3 dans le deuxième mode de réalisation « PULL » selon l'invention.

Dans une première étape 16, la première entité cliente C1 souhaite supprimer le fichier F compris dans le premier serveur de contenu SC1 et les correspondances d'adresses stockées dans tout serveur d'autres systèmes interconnectés suite à la mise en oeuvre du procédé de distribution de fichier 3 dans le deuxième mode de réalisation « PULL ». La première entité cliente C1 envoie donc une requête de suppression du fichier F comprenant la seule adresse du fichier F qu'il connait, c'est-à-dire la première adresse URL1. Cette requête est reçue par le serveur de contenu SC1, qui supprime alors le fichier F situé à la première adresse URL1, dans une étape 17.

Cette requête de suppression est transmise par le serveur de contenu SC1 à la première passerelle GW1, qui réalise alors, à une étape 41, une conversion de la première adresse URL1 en la deuxième adresse URLG1, à partir de la correspondance entre la première adresse URL1 et la deuxième adresse URLG1 stockée par la première passerelle GW1. Cette correspondance stockée par la première passerelle GW1 est ensuite supprimée, à l'étape 42, par la première passerelle GW1.

La première passerelle GW1 modifie ensuite, dans la requête de suppression du fichier F, la première adresse URL1 en la deuxième adresse URLG1. Cette modification est réalisée à partir de l'étape de conversion, qui a transformé la première adresse URL1 en deuxième adresse deuxième adresse URLG1.

La requête en suppression du fichier F est ensuite transmise à chaque système interconnecté ayant mis en oeuvre le procédé 3 dont la première passerelle GW1 a connaissance, c'est-à-dire dans cet exemple le deuxième système B. La requête est donc transmise à la deuxième passerelle GW2 dans une étape 18, la requête en suppression du fichier F comprenant la deuxième adresse URLG1.

La deuxième passerelle GW2, à réception de cette requête, transmet la requête de suppression du fichier F au deuxième serveur de contenu SC2 via le deuxième serveur de gestion S2, c'est-à-dire que la requête de suppression du fichier F est transmise au deuxième serveur de gestion S2 qui la transmet à son tour au deuxième serveur de contenu SC2.

A réception de cette requête, à une étape 43, le deuxième serveur de gestion S2 supprime la correspondance entre la deuxième adresse URLG1 et la troisième adresse URL2 qu'il stocke.

Le procédé de suppression selon le deuxième mode de réalisation « PULL » peut comprendre une alerte AI à l'utilisateur de la deuxième entité cliente C2 pour l'informer que le fichier F a été supprimé. Optionnellement, une information que la suppression est réalisée est ensuite envoyée par le serveur de contenu SC2 au serveur de contenu SC1 puis à la C1 à une étape 20.

Grâce au procédé de suppression selon le deuxième mode de réalisation « PULL », toutes les correspondances stockées par des entités du réseau R traitant d'adresses liées au fichier F sont supprimées. De la même façon, le fichier F est supprimé du premier système A et toute copie du fichier F sur tout système compris dans le réseau R est supprimée. La requête de suppression ne fait jamais paraître l'adresse du fichier dans un système à un autre système interconnecté, résolvant ainsi les problèmes de sécurité de l'art antérieur.

## Revendications

1. Procédé de distribution, par une première entité cliente (C1), d'un fichier (F) à destination d'au moins une deuxième entité cliente (C2), dans un réseau (R) de communication selon le standard 3GPP MCS « 3rd Generation Partnership Program Mission-Critical System », la première entité cliente (C1) étant comprise dans un premier système (A) comprenant en outre un premier serveur de contenu (SC1) et un premier serveur de gestion de distribution de fichier (S1), la deuxième entité cliente (C2) étant comprise dans un deuxième système (B) comprenant en outre un deuxième serveur de contenu (SC2) et un deuxième serveur de gestion de distribution de fichier (S2), le premier système (A) et le deuxième système (B) étant interconnectés par une première passerelle (GW1) comprise dans le premier système (A) et par une deuxième passerelle (GW2) comprise dans le deuxième système (B), le fichier (F) étant stocké par le premier serveur de contenu (SC1) et étant associé à une première adresse (URL1) dans le premier système (A), le réseau (R) étant formé par au moins le premier système (A) et le deuxième système (B), le procédé comprenant au moins les étapes de :
- Transmission (12A), par la première entité cliente (C1) à la première passerelle (GW1), d'une requête de distribution de fichier comprenant la première adresse (URL1) associée au fichier (F) dans le premier système (A),
- Modification (21,31), par la première passerelle (GW1), dans la requête de distribution de fichier, de la première adresse (URL1) associée au fichier (F) dans le premier système (A), en une deuxième adresse (URLG1) associée au fichier (F) dans le premier système (A),
- Stockage, par la première passerelle (GW1) d'une correspondance entre la première adresse (URL1) et la deuxième adresse (URLG1),
- Transmission (12B), par la première passerelle (GW1) au deuxième serveur de contenu via la deuxième passerelle (GW2) et le deuxième serveur de gestion de distribution de fichier (S2), de la requête de distribution de fichier comprenant la deuxième adresse (URLG1) associée au fichier (F) dans le premier système (A),
- Modification, par le deuxième serveur de gestion de distribution de fichier (S2), dans la requête de distribution de fichier, de la deuxième adresse (URLG1) associée au fichier (F) dans le premier système (A), en une troisième adresse (URL2) associée au fichier (F) dans le deuxième système (B),
- Stockage, par le deuxième serveur de gestion de distribution de fichier (S2) d'une correspondance entre la deuxième adresse (URLG1) et la troisième adresse (URL2),
- Transmission, par le deuxième serveur de contenu (SC2), de la requête de distribution de fichier comprenant la troisième adresse (URL2) à la deuxième entité cliente (C2),
- Transmission (14), par la deuxième entité cliente (C2), d'une requête de téléchargement du fichier (F) au deuxième serveur de contenu (SC2), la requête comprenant la troisième adresse (URL2),
- Réception (14), par la deuxième entité cliente (C2), du fichier (F).

2. Procédé selon la revendication précédente selon lequel le fichier (F) est envoyé (23) depuis le deuxième serveur de contenu (SC2) vers l'entité cliente (C2) en réponse à la requête de téléchargement du fichier (F).

3. Procédé selon la revendication précédente selon lequel le fichier (F) est transmis par le premier serveur de contenu (SC1) au deuxième serveur de contenu (SC2) et le fichier (F) est stocké par le deuxième serveur de contenu (SC2) avant la transmission, par la deuxième entité cliente (C2), de la requête de téléchargement du fichier (F).

4. Procédé selon l'une quelconque des revendications 2 ou 3 selon lequel, après réception de la requête de distribution du fichier et du fichier (F), le deuxième serveur de contenu (SC2) transmet à la première passerelle (GW1), via la deuxième passerelle (GW2), une réponse indiquant que le fichier (F) a été stocké par le deuxième serveur de contenu (SC2), la réponse comprenant la troisième adresse (URL2).

5. Procédé selon la revendication 4 selon lequel la deuxième passerelle (GW2), à réception de la réponse :
- crée une quatrième adresse (URLG2) associée au fichier (F) stocké par le deuxième serveur de contenu (SC2) dans le deuxième système (B),
- modifie la troisième adresse (URL2) comprise dans la réponse en la quatrième adresse (URLG2) créée,
- stocke une correspondance entre la troisième adresse (URL2) et la quatrième adresse (URLG2),
- transmet (24) la réponse comprenant la quatrième adresse (URLG2) à la première passerelle (GW1),
et selon lequel la première passerelle (GW1) stocke une correspondance entre la deuxième adresse (URLG1) et la quatrième adresse (URLG2) et une information de stockage du fichier (F) par le deuxième serveur de contenu (SC2) à la quatrième adresse (URLG2).

6. Procédé selon l'une quelconque des revendications 1 ou 2 selon lequel :
- la requête en téléchargement du fichier (F) est transmise, par la deuxième entité cliente (C2) au deuxième serveur de contenu (SC2), puis
- la troisième adresse (URL2) comprise dans la requête en téléchargement est transformée en la deuxième adresse (URLG1) à partir de la correspondance entre la deuxième adresse (URL2) et la troisième adresse (URLG1) stockée par le deuxième serveur de gestion (S2), puis
- la requête est transmise par le deuxième serveur de contenu (SC2) à la première passerelle (GW1) via la deuxième passerelle (GW2), puis
- la deuxième adresse (URLG1) comprise dans la requête en téléchargement est transformée en la première adresse (URL1) à partir de la correspondance entre la première adresse (URL1) et la deuxième adresse (URLG1) stockée par la première passerelle (GW1), puis
- la requête est transmise par la première passerelle (GW1) au premier serveur de contenu (SC1), puis
- le fichier (F) est transmis par le premier serveur de contenu (SC1) au deuxième serveur de contenu (SC2).

7. Procédé de suppression du fichier distribué selon le procédé de distribution de fichier selon la revendication 5 **caractérisé en ce qu'**il comprend au moins les étapes de :
- Transmission (16), par la première entité cliente (C1), d'une requête de suppression du fichier (F) au premier serveur de contenu (SC1), la requête comprenant la première adresse (URL1) associée au fichier (F) au sein du premier système (A),
- Suppression (17), par le premier serveur de contenu SC1, du fichier (F) qu'il stocke,
- Transmission (18), par le premier serveur de contenu (SC1), de la requête de suppression du fichier (F) à la première passerelle (GW1),
- Conversion (41), par la première passerelle (GW1), de la première adresse (URL1) associée au fichier (F) dans le premier système (A), en la deuxième adresse (URLG1) associée au fichier (F) dans le premier système (A), à partir de la correspondance entre la première adresse (URL1) et la deuxième adresse (URLG1) stockée par la première passerelle (GW1),
- Suppression (42), par la première passerelle (GW1), de la correspondance entre la première adresse (URL1) et la deuxième adresse (URLG1) stockée par la première passerelle (GW1),
- Modification (43), par la première passerelle (GW1), dans la requête de suppression du fichier, de la première adresse (URL1) associée au fichier (F) dans le premier système (A), en la quatrième adresse (URLG2) associée au fichier (F) dans le deuxième système (B), à partir de l'information de stockage du fichier (F) par le deuxième serveur de contenu (SC2) à la quatrième adresse (URLG2), de l'étape de conversion (41) et de la correspondance entre la deuxième adresse (URLG1) et la quatrième adresse (URLG2) stockée par la première passerelle (GW1),
- Transmission (18), par la première passerelle (GW1), de la requête de suppression du fichier (F) à la deuxième passerelle (GW2),
- Modification (44), par la deuxième passerelle (GW2), dans la requête de suppression du fichier, de la quatrième adresse (URLG2), en la troisième adresse (URL2), à partir de la correspondance entre la quatrième adresse (URLG2) et la troisième adresse (URL2) stockée par la deuxième passerelle (GW2),
- Suppression (45), par la deuxième passerelle (GW2), de la correspondance entre la quatrième adresse (URLG2) et la troisième adresse (URL2) stockée par la deuxième passerelle (GW2),
- Transmission (18), par la deuxième passerelle (GW2), de la requête de suppression du fichier (F) au deuxième serveur de contenu (SC2) via le deuxième serveur de gestion (S2),
- Suppression, par le deuxième serveur de gestion (S2), de la correspondance entre la deuxième adresse (URLG1) et la troisième adresse (URL2) stockée par le deuxième serveur de gestion (S2).

8. Procédé de suppression du fichier selon la revendication 7 comprenant en outre une étape de suppression, par le deuxième serveur de contenu (SC2), du fichier (F) qu'il stocke.

9. Procédé de suppression du fichier distribué selon le procédé de distribution de fichier selon la revendication 6 **caractérisé en ce qu'**il comprend au moins les étapes de :
- Transmission (16), par la première entité cliente (C1), d'une requête de suppression du fichier (F) au premier serveur de contenu (SC1), la requête comprenant la première adresse (URL1) associée au fichier (F) au sein du premier système (A),
- Suppression (17), par le premier serveur de contenu SC1, du fichier (F) qu'il stocke,
- Transmission (16), par le premier serveur de contenu (SC1), de la requête de suppression du fichier (F) à la première passerelle (GW1),
- Conversion (41), par la première passerelle (GW1),
- Suppression, par la première passerelle (GW1), de la correspondance entre la première adresse (URL1) et la deuxième adresse (URLG1) stockée par la première passerelle (GW1),
- Modification (41), par la première passerelle (GW1), dans la requête de suppression du fichier, de la première adresse (URL1) associée au fichier (F) dans le premier système (A), en la deuxième adresse (URLG1) associée au fichier (F) dans le premier système (A), à partir de la correspondance entre la première adresse (URL1) et la deuxième adresse (URLG1) stockée par la première passerelle (GW1),
- Transmission (18), par la première passerelle (GW1) au deuxième serveur de contenu (SC2), de la requête de suppression du fichier (F) via la deuxième passerelle (GW2) et le deuxième serveur de gestion (S2),
- Suppression, par le deuxième serveur de gestion (S2), de la correspondance entre la deuxième adresse (URLG1) et la troisième adresse (URL2) stockée par le deuxième serveur de gestion (S2).

10. Réseau de communication (R) selon le standard 3GPP MCS « 3rd Generation Partnership Program Mission-Critical System », le réseau de communication (R) étant formé par au moins :
- un premier système (A) comprenant au moins une première entité cliente (C1), un premier serveur de contenu (SC1) et un premier serveur de gestion de distribution de fichier (S1),
- un deuxième système (B) comprenant au moins une deuxième entité cliente (C2), un deuxième serveur de contenu (SC2) et un deuxième serveur de gestion de distribution de fichier (S2),
le premier système (A) et le deuxième système (B) étant interconnectés par une première passerelle (GW1) comprise dans le premier système (A) et par une deuxième passerelle (GW2) comprise dans le deuxième système (B), le réseau (R) de communication étant configuré pour mettre en oeuvre le procédé de distribution de fichier selon l'une quelconque des revendications 1 à 6 et le procédé de suppression de fichier selon l'une des revendication 7 à 9.

11. Produit programme d'ordinateur comprenant des instructions qui conduisent le réseau selon la revendication 10 à exécuter les étapes du procédé selon l'une des revendications 1 à 6 et du procédé de suppression de fichier selon l'une des revendication 7 à 9.

12. Support lisible par ordinateur, sur lequel est enregistré le produit programme d'ordinateur selon la revendication 11.

## Patentansprüche

1. Verfahren zur Verteilung einer Datei (F) durch eine erste Client-Entität (C1) an mindestens eine zweite Client-Entität (C2) in einem Kommunikationsnetz (R) gemäß dem Standard 3GPP MCS "3rd Generation Partnership Program Mission-Critical System", wobei die erste Client-Entität (C1) in einem ersten System (A) enthalten ist, das außerdem einen ersten Inhaltsserver (SC1) und einen ersten Server (S1) für die Verwaltung der Dateiverteilung umfasst, wobei die zweite Client-Entität (C2) in einem zweiten System (B ) enthalten ist, das außerdem einen zweiten Inhaltsserver (SC2) und einen zweiten Server (S2) für die Verwaltung der Dateiverteilung umfasst, wobei das erste System (A) und das zweite System (B) durch ein erstes Gateway (GW1), das im ersten System (A) enthalten ist, und durch ein zweites Gateway (GW2), das im zweiten System (B) enthalten ist, miteinander verbunden sind, wobei die Datei (F) vom ersten Inhaltsserver (SC1) gespeichert wird und einer ersten Adresse (URL1) im ersten System (A) zugeordnet ist, wobei das Netzwerk (R) durch mindestens das erste System (A) und das zweite System (B) gebildet wird und das Verfahren mindestens die folgenden Schritte umfasst:
- Übertragen (12A) durch die erste Client-Entität (C1) an das erste Gateway (GW1) einer Anforderung zur Dateiverteilung, die die erste Adresse (URL1) enthält, die der Datei (F) im ersten System (A) zugeordnet ist,
- Ändern (21, 31) durch das erste Gateway (GW1) in der Anforderung zur Dateiverteilung der ersten Adresse (URL1), die der Datei (F) im ersten System (A) zugeordnet ist, in eine zweite Adresse (URLG1), die der Datei (F) im ersten System (A) zugeordnet ist,
- Speichern durch das erste Gateway (GW1) einer Übereinstimmung zwischen der ersten Adresse (URL1) und der zweiten Adresse (URLG1),
- Übertragen (12B) durch das erste Gateway (GW1) an den zweiten Inhaltsserver über das zweite Gateway (GW2) und den zweiten Server (S2) zur Verwaltung der Dateiverteilung der Anforderung zur Dateiverteilung, die die zweite Adresse (URLG1) enthält, die der Datei (F) im ersten System (A) zugeordnet ist,
- Ändern der zweiten Adresse (URLG1), die der Datei (F) im ersten System (A) zugeordnet ist, in eine dritte Adresse (URL2), die der Datei (F) im zweiten System (B) zugeordnet ist, durch den zweiten Server (S2) zur Verwaltung der Dateiverteilung in der Anforderung zur Dateiverteilung,
- Speichern einer Übereinstimmung zwischen der zweiten Adresse (URLG1) und der dritten Adresse (URL2) durch den zweiten Server (82) zur Verwaltung der Dateiverteilung,
- Übertragen der Anforderung zur Dateiverteilung, die die dritte Adresse (URL2) enthält, durch den zweiten Inhaltsserver (SC2) an die zweite Client-Entität (C2),
- Übertragen (14) einer Download-Anforderung der Datei (F) durch die zweite Client-Entität (C2) an den zweiten Inhaltsserver (SC2), wobei die Anforderung die dritte Adresse (URL2) enthält,
- Empfangen (14) der Datei (F) durch die zweite Client-Entität (C2).

2. Verfahren nach dem vorausgehenden Anspruch, nach dem die Datei (F) als Antwort auf die Download-Anforderung der Datei (F) von dem zweiten Inhaltsserver (SC2) an die Client-Entität (C2) gesendet (23) wird.

3. Verfahren nach dem vorausgehenden Anspruch, bei dem die Datei (F) von dem ersten Inhaltsserver (SC1) an den zweiten Inhaltsserver (SC2) übertragen wird und die Datei (F ) von dem zweiten Inhaltsserver (SC2) gespeichert wird, bevor die zweite Client-Entität (C2) die Download-Anforderung der Datei (F) übermittelt.

4. Verfahren nach einem der Ansprüche 2 oder 3, bei dem der zweite Inhaltsserver (SC2) nach dem Empfang der Anforderung zur Verteilung der Datei und der Datei ( F) über das zweite Gateway (GW2) eine Antwort an das erste Gateway (GW1) sendet, die angibt, dass die Datei (F) vom zweiten Inhaltsserver (SC2) gespeichert wurde, wobei die Antwort die dritte Adresse (URL2) enthält.

5. Verfahren nach Anspruch 4, bei dem das zweite Gateway (GW2) bei Empfang der Antwort:
- eine vierte Adresse (URLG2) erzeugt, die mit der Datei (F) verknüpft ist, die vom zweiten Inhaltsserver (SC2) im zweiten System (B) gespeichert wird,
- die dritte Adresse (URL2), die in der Antwort enthalten ist, in die vierte erstellte Adresse (URLG2) ändert,
- eine Übereinstimmung zwischen der dritten Adresse (URL2) und der vierten Adresse (URLG2) speichert,
- die Antwort, die die vierte Adresse (URLG2) enthält, an das erste Gateway (GW1) weiterleitet (24),
und bei dem das erste Gateway (GW1) eine Übereinstimmung zwischen der zweiten Adresse (URLG1) und der vierten Adresse (URLG2) und eine Information über die Speicherung der Datei (F) durch den zweiten Inhaltsserver (SC2) an der vierten Adresse (URLG2) speichert.

6. Verfahren nach einem der Ansprüche 1 bis 2, bei dem:
- die Download-Anforderung der Datei (F) von der zweiten Client-Entität (C2) an den zweiten Inhaltsserver (SC2) übertragen wird, dann
- die dritte Adresse (URL2), die in der Download-Anforderung enthalten ist, ausgehend von der Übereinstimmung zwischen der zweiten Adresse (URL2) und der dritten Adresse (URLG1), die von dem zweiten Verwaltungsserver (S2) gespeichert wird, in die zweite Adresse (URLG1) umgewandelt wird, und dann
- die Anfrage von dem zweiten Inhaltsserver (SC2) über das zweite Gateway (GW2) an das erste Gateway (GW1) weitergeleitet wird, und dann
- die zweite Adresse (URLG1), die in der Download-Anforderung enthalten ist, ausgehend von der Übereinstimmung zwischen der ersten Adresse (URL1) und der zweiten Adresse (URLG1), die von dem ersten Gateway (GW1) gespeichert wird, in die erste Adresse (URL1) umgewandelt wird, und dann
- die Anfrage von dem ersten Gateway (GW1) an den ersten Inhaltsserver (SC1) übertragen wird, und dann
- die Datei (F) von dem ersten Inhaltsserver (SC1) an den zweiten Inhaltsserver (SC2) übertragen wird.

7. Verfahren zum Löschen der verteilten Datei nach dem Dateiverteilungsverfahren nach Anspruch 5, **dadurch gekennzeichnet, dass** es mindestens die folgenden Schritte umfasst:
- Übertragen (16) durch die erste Client-Entität (C1) einer Anforderung zum Löschen der Datei (F) an den ersten Inhaltsserver (SC1), wobei die Anforderung die erste Adresse (URL1) enthält, die mit der Datei (F) innerhalb des ersten Systems (A) verknüpft ist,
- Löschen (17) durch den ersten Inhaltsserver SC1 der Datei (F), die er speichert,
- Übertragen (18) der Anforderung zum Löschen der Datei (F) durch den ersten Inhaltsserver (SC1) an das erste Gateway (GW1),
- Umwandeln (41) durch das erste Gateway (GW1) der ersten Adresse (URL1), die der Datei (F) im ersten System (A) zugeordnet ist, ausgehend von der Übereinstimmung zwischen der ersten Adresse (URL1) und der zweiten Adresse (URLG1), die vom ersten Gateway (GW1) gespeichert wird, in die zweite Adresse (URLG1), die der Datei (F) im ersten System (A) zugeordnet ist,
- Löschen (42) durch das erste Gateway (GW1) der Übereinstimmung zwischen der ersten Adresse (URL1) und der zweiten Adresse (URLG1), die vom ersten Gateway (GW1) gespeichert wurde,
- Ändern (43) durch das erste Gateway (GW1) in der Anforderung zum Löschen der Datei, der ersten Adresse (URL1), die der Datei (F) im ersten System (A) zugeordnet ist, in die vierte Adresse (URLG2), die der Datei (F) im zweiten System (B) zugeordnet ist, ausgehend von der Information über die Speicherung der Datei (F) durch den zweiten Inhaltsserver (SC2) an der vierten Adresse (URLG2), sowie ausgehend vom Konvertierungsschritt (41) und der Übereinstimmung zwischen der zweiten Adresse (URLG1) und der vierten Adresse (URLG2), die vom ersten Gateway (GW1) gespeichert wurde,
- Übertragen (18) durch das erste Gateway (GW1) der Anforderung zum Löschen der Datei (F) an das zweite Gateway (GW2),
- Ändern (44) durch das zweite Gateway (GW2) in der Anforderung zum Löschen der Datei der vierten Adresse (URLG2) in die dritte Adresse (URL2), ausgehend von der Übereinstimmung zwischen der vierten Adresse (URLG2) und der dritten Adresse (URL2), die vom zweiten Gateway (GW2) gespeichert wurde,
- Löschen (45) durch das zweite Gateway (GW2) der Übereinstimmung zwischen der vierten Adresse (URLG2) und der dritten Adresse (URL2), die vom zweiten Gateway (GW2) gespeichert wurde,
- Übertragen (18) durch das zweite Gateway (GW2) der Anforderung zum Löschen der Datei (F) über den zweiten Verwaltungsserver (S2) an den zweiten Inhaltsserver (SC2),
- Löschen durch den zweiten Verwaltungsserver (S2) der Übereinstimmung zwischen der zweiten Adresse (URLG1) und der dritten Adresse (URL2), die vom zweiten Verwaltungsserver (S2) gespeichert wurde.

8. Löschverfahren der Datei nach Anspruch 7, des weiteren einen Löschschritt der Datei (F) durch den zweiten Inhaltsserver (SC2), die er speichert, umfassend.

9. Löschverfahren der nach dem Dateiverteilungsverfahren nach Anspruch 6 verteilten Datei, **dadurch gekennzeichnet, dass** es mindestens folgende Schritte umfasst:
- Übertragen (16) durch die erste Client-Entität (C1) einer Anforderung zum Löschen der Datei (F) an den ersten Inhaltsserver (SC1), wobei die Anforderung die erste Adresse (URL1) enthält, die mit der Datei (F) innerhalb des ersten Systems (A) verknüpft ist,
- Löschen (17) durch den ersten Inhaltsserver SC1 der Datei (F), die er speichert,
- Übertragen (16) durch den ersten Inhaltsserver (SC1) der Anforderung zum Löschen der Datei (F) an das erste Gateway (GW1),
- Umwandeln (41) durch das erste Gateway (GW1),
- Löschen durch das erste Gateway (GW1) der Übereinstimmung zwischen der ersten Adresse (URL1) und der zweiten Adresse (URLG1), die durch das erste Gateway (GW1) gespeichert wurde,
- Ändern (41) der ersten Adresse (URL1), die der Datei (F) im ersten System (A) zugeordnet ist, in die zweite Adresse (URLG1), die der Datei (F) im ersten System (A) zugeordnet ist, durch das erste Gateway (GW1) in der Anforderung zum Löschen der Datei anhand der Übereinstimmung zwischen der ersten Adresse (URL1) und der zweiten Adresse (URLG1), die durch das erste Gateway (GW1) gespeichert wurde,
- Übertragen (18) der Anforderung zum Löschen der Datei (F) durch das erste Gateway (GW1) an den zweiten Inhaltsserver (SC2) über das zweite Gateway (GW2) und den zweiten Verwaltungsserver (S2),
- Löschen durch den zweiten Verwaltungsserver (S2) der Übereinstimmung zwischen der zweiten Adresse (URLG1) und der dritten Adresse (URL2), die durch den zweiten Verwaltungsserver (S2) gespeichert wurde.

10. Kommunikationsnetz (R) gemäß dem 3GPP MCS-Standard "3rd Generation Partnership Program Mission-Critical System", wobei das Kommunikationsnetz (R) besteht aus mindestens:
- einem ersten System (A), das mindestens eine erste Client-Entität (C1), einen ersten Inhaltsserver (SC1) und einen ersten Verwaltungsserver zur Dateiverteilung (S1) umfasst,
- einem zweiten System (B), das mindestens eine zweite Client-Entität (C2), einen zweiten Inhaltsserver (SC2) und einen zweiten Verwaltungsserver zur Dateiverteilung (S2) umfasst,
wobei das erste System (A) und das zweite System (B) durch ein erstes Gateway (GW1), das im ersten System (A) enthalten ist, und durch ein zweites Gateway (GW2), das im zweiten System (B) enthalten ist, miteinander verbunden sind, wobei das Kommunikationsnetz (R) so konfiguriert ist, dass es das Dateiverteilungsverfahren nach einem der Ansprüche 1 bis 6 und das Dateilöschverfahren nach einem der Ansprüche 7 bis 9 durchführt.

11. Computerprogrammprodukt mit Anweisungen, die das Kommunikationsnetz nach Anspruch 10 dazu veranlassen, die Schritte des Verfahrens nach einem der Ansprüche 1 bis 6 und des Dateilöschverfahrens nach einem der Ansprüche 7 bis 9 auszuführen.

12. Computerlesbarer Datenträger, auf dem das Computerprogrammprodukt nach Anspruch 11 gespeichert ist.

## Claims

1. A method for distributing a file (F), by a first client entity (C1), to at least one second client entity (C2) in a communication network (R) according to the 3GPP MCS (3rd Generation Partnership Program Mission-Critical System) standard, the first client entity (C1) being included in a first system (A) further comprising a first content server (SC1) and a first file distribution management server (S1), the second client entity (C2) being included in a second system (B) further comprising a second content server (SC2) and a second file distribution management server (S2), the first system (A) and the second system (B) being interconnected through a first gateway (GW1) included in the first system (A) and through a second gateway (GW2) included in the second system (B), the file (F) being stored by the first content server (SC1) and being associated with a first address (URL1) in the first system (A), the network (R) being formed by at least the first system (A) and the second system (B), the method comprising at least the steps of:
- Transmitting (12A), by the first client entity (C1) to the first gateway (GW1), a file distribution request comprising the first address (URL1) associated with the file (F) in the first system (A),
- Modifying (21,31), by the first gateway (GW1), in the file distribution request, the first address (URL1) associated with the file (F) in the first system (A), to a second address (URLG1) associated with the file (F) in the first system (A),
- Storing, by the first gateway (GW1), a correspondence between the first address (URL1) and the second address (URLG1),
- Transmitting (12B), by the first gateway (GW1) to the second content server via the second gateway (GW2) and the second file distribution management server (S2), the file distribution request comprising the second address (URLG1) associated with the file (F) in the first system (A),
- Modifying, by the second file distribution management server (S2), in the file distribution request, the second address (URLG1) associated with the file (F) in the first system (A), to a third address (URL2) associated with the file (F) in the second system (B),
- storing, by the second file distribution management server (S2), a correspondence between the second address (URLG1) and the third address (URL2),
- Transmitting, by the second content server (SC2), the file distribution request including the third address (URL2) to the second client entity (C2),
- transmitting (14), by the second client entity (C2), a request to download the file (F) to the second content server (SC2), the request comprising the third address (URL2),
- Receiving (14), by the second client entity (C2), the file (F).

2. The method according to the preceding claim, wherein the file (F) is sent (23) from the second content server (SC2) to the client entity (C2) in response to the request to download the file (F).

3. The method according to the preceding claim, wherein the file (F) is transmitted by the first content server (SC1) to the second content server (SC2) and the file (F) is stored by the second content server (SC2) prior to transmitting, by the second client entity (C2), the request to download the file (F).

4. The method according to any of claims 2 or 3, wherein, after receiving the request to distribute the file and the file (F), the second content server (SC2) transmits to the first gateway (GW1), via the second gateway (GW2), a response indicating that the file (F) has been stored by the second content server (SC2), the response comprising the third address (URL2).

5. The method according to claim 4, wherein the second gateway (GW2), upon receiving the response:
- creates a fourth address (URLG2) associated with the file (F) stored by the second content server (SC2) in the second system (B),
- modifies the third address (URL2) included in the response to the fourth address (URLG2) created,
- stores a correspondence between the third address (URL2) and the fourth address (URLG2),
- transmits (24) the response including the fourth address (URLG2) to the first gateway (GW1),
and wherein the first gateway (GW1) stores a correspondence between the second address (URLG1) and the fourth address (URLG2) and file (F) storage information by the second content server (SC2) at the fourth address (URLG2).

6. The method according to any of claims 1 or 2, wherein:
- the request to download the file (F) is transmitted, by the second client entity (C2) to the second content server (SC2), and then
- the third address (URL2) included in the download request is transformed into the second address (URLG1) from the correspondence between the second address (URL2) and the third address (URLG1) stored by the second management server (S2), and then
- the request is transmitted by the second content server (SC2) to the first gateway (GW1) via the second gateway (GW2), and then
- the second address (URLG1) included in the download request is transformed into the first address (URL1) from the correspondence between the first address (URL1) and the second address (URLG1) stored by the first gateway (GW1), and then
- the request is transmitted by the first gateway (GW1) to the first content server (SC1), and then
- the file (F) is transmitted from the first content server (SC1) to the second content server (SC2).

7. A method for deleting the file distributed according to the file distribution method according to claim 5, **characterised in that** it comprises at least the steps of:
- Transmitting (16), by the first client entity (C1), a request to delete the file (F) to the first content server (SC1), the request including the first address (URL1) associated with the file (F) within the first system (A),
- Deleting (17), by the first content server SC1, the file (F) that it stores,
- Transmitting (18), by the first content server (SC1), the request to delete the file (F) to the first gateway (GW1),
- Converting (41), by the first gateway (GW1), the first address (URL1) associated with the file (F) in the first system (A), into the second address (URLG1) associated with the file (F) in the first system (A), from the correspondence between the first address (URL1) and the second address (URLG1) stored by the first gateway (GW1),
- Deleting (42), by the first gateway (GW1), the correspondence between the first address (URL1) and the second address (URLG1) stored by the first gateway (GW1),
- Modifying (43), by the first gateway (GW1), in the request to delete the file, the first address (URL1) associated with the file (F) in the first system (A) to the fourth address (URLG2) associated with the file (F) in the second system (B), from the storage information of the file (F) by the second content server (SC2) at the fourth address (URLG2), from the conversion step (41) and from the correspondence between the second address (URLG1) and the fourth address (URLG2) stored by the first gateway (GW1),
- Transmitting (18), by the first gateway (GW1), the request to delete the file (F) to the second gateway (GW2),
- Modifying (44), by the second gateway (GW2), in the file deletion request, the fourth address (URLG2) to the third address (URL2), from the correspondence between the fourth address (URLG2) and the third address (URL2) stored by the second gateway (GW2),
- Deleting (45), by the second gateway (GW2), the correspondence between the fourth address (URLG2) and the third address (URL2) stored by the second gateway (GW2),
- Transmitting (18), by the second gateway (GW2), the request to delete the file (F) to the second content server (SC2) via the second management server (S2),
- Deleting, by the second management server (S2), the correspondence between the second address (URLG1) and the third address (URL2) stored by the second management server (S2).

8. The file deletion method according to claim 7, further comprising a step of deleting, by the second content server (SC2), the file (F) that it stores.

9. A method for deleting the file distributed according to the file distribution method according to claim 6, **characterised in that** it comprises at least the steps of:
- Transmitting (16), by the first client entity (C1), a request to delete the file (F) to the first content server (SC1), the request including the first address (URL1) associated with the file (F) within the first system (A),
- Deleting (17), by the first content server SC1, the file (F) that it stores,
- Transmitting (16), by the first content server (SC1), the request to delete the file (F) to the first gateway (GW1),
- Converting (41), by the first gateway (GW1),
- Deleting, by the first gateway (GW1), the correspondence between the first address (URL1) and the second address (URLG1) stored by the first gateway (GW1),
- Modifying (41), by the first gateway (GW1), in the request to delete the file, the first address (URL1) associated with the file (F) in the first system (A), to the second address (URLG1) associated with the file (F) in the first system (A), from the correspondence between the first address (URL1) and the second address (URLG1) stored by the first gateway (GW1),
- Transmitting (18), by the first gateway (GW1) to the second content server (SC2), the request to delete the file (F) via the second gateway (GW2) and the second management server (S2),
- Deleting, by the second management server (S2), the correspondence between the second address (URLG1) and the third address (URL2) stored by the second management server (S2).

10. A communication network (R) according to the 3GPP MCS (3rd Generation Partnership Program Mission-Critical System) standard, the communication network (R) being formed by at least:
- a first system (A) comprising at least a first client entity (C1), a first content server (SC1) and a first file distribution management server (S1),
- a second system (B) comprising at least a second client entity (C2), a second content server (SC2) and a second file distribution management server (S2),
the first system (A) and the second system (B) being interconnected through a first gateway (GW1) included in the first system (A) and through a second gateway (GW2) included in the second system (B), the communication network (R) being configured to implement the file distribution method according to any of claims 1 to 6 and the file deletion method according to any of claims 7 to 9.

11. A computer program product comprising instructions that cause the network of claim 10 to execute the steps of the method according to any of claims 1 to 6 and the file deletion method according to any of claims 7 to 9.

12. A computer-readable medium, on which the computer program product according to claim 11 is recorded.
